Europäisches Patentamt

European Patent Office

Office européen des brevets

(11) Publication number: **0 430 617 B1**

# EUROPEAN PATENT SPECIFICATION

(45) Date of publication of patent specification: **19.07.95**

(51) Int. Cl.⁶: **B60C 11/00**, B60C 11/18, B60C 1/00

(21) Application number: **90312826.2**

(22) Date of filing: **26.11.90**

(54) **Radial tyre for passenger cars.**

(30) Priority: **28.11.89 JP 308232/89**

(43) Date of publication of application:
**05.06.91 Bulletin 91/23**

(45) Publication of the grant of the patent:
**19.07.95 Bulletin 95/29**

(84) Designated Contracting States:
**DE FR GB IT**

(56) References cited:
**EP-A- 0 254 766
EP-A- 0 263 885
DE-A- 3 823 662
US-A- 4 745 150**

**KAUTSCHUK UND GUMMI - KUNSTSTOFFE.
vol. 39, no. 1, January 1986, HEIDELBERG DE,
pages 30-32; "New Polymer Development for
Low Rolling Resistance Tires"**

(73) Proprietor: **SUMITOMO RUBBER INDUSTRIES
LIMITED
No. 1-1, Tsutsui-cho 1-chome
Chuo-ku
Kobe-shi
Hyogo 651 (JP)**

(72) Inventor: **Saito, Yuichi
1-4-5-404 Honjo-cho,
Higashinada-ku
Kobe-shi,
Hyogo (JP)**
Inventor: **Kikuchi, Naohiko
1-1-23 Hinokuchi-cho
Nishinomiya-shi,
Hyogo (JP)**

(74) Representative: **Stewart, Charles Geoffrey
SP TYRES UK LIMITED
Technical Division
Fort Dunlop,
Erdington,
Birmingham B24 9OT (GB)**

## Description

The present invention relates to a radial tyre for passenger cars. Particularly, it relates to a radial tyre for passenger cars having anti-lock braking systems.

Passenger cars now have very high performance, because many improvements have been made to engines and other mechanical and electrical elements of the cars. For example, the power output of engines is enhanced and body weight is reduced. Also, starting, accelerating and cornering properties are significantly improved. This progress requires an improvement in braking properties so that cars safely stop on every road condition, i.e. dry roads, wet roads, different friction road and slippery roads (e.g. ice and snow surfaces).

With a conventional braking system, on a slippery surface such as an ice surface, tyres are locked immediately the brakes are applied, and the car can become out of control. This is very dangerous. Anti-lock brake systems (ABS) therefore have been employed since 1978. These may be mechanical or electronic systems in which the brakes are released as soon as a tyre locks. ABS can safely stop a car in any road condition without disturbing the car conditions and causing instability or loss of control.

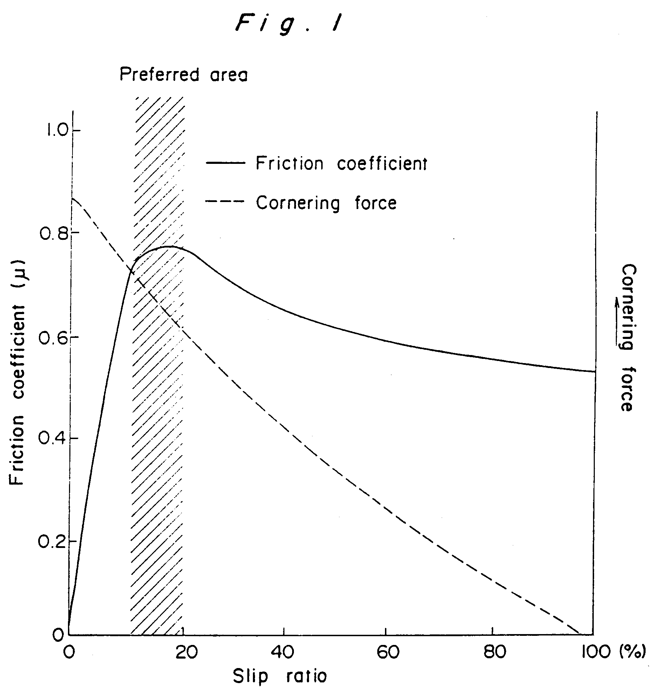

On the other hand, Figure 1 shows the relation between the slip ratio of a tyre and both friction coefficient and cornering force. As is apparent from Figure 1, the slip ratio gives a maximum value at a certain point at which braking is most effective. The anti-lock brake system controls the slip ratio of tyres to keep them near their maximum value. By contrast,, the cornering force curve has a maximum value at zero slip ratio and reduces as the slip ratio increases. When a tyre is completely locked (i.e. 100% slip ratio), the cornering force is zero, thus causing loss of vehicle control. If both friction coefficient and cornering force are taken into consideration, it is preferred that the maximum value of friction coefficient is present at a lower slip ratio in view of cornering force, but if it is present at very low slip ratio (e.g. less than 10%), it becomes very difficult to control braking. As a result, it is preferred that a maximum value of the friction coefficient is present at a slip ratio of 10 to 20%, as shown by the diagonal area in Figure 1. Radial tyres which have these properties are thus particularly suitable for passenger cars equipped with anti-lock braking systems.

It is thus an object of the present invention to provide a radial tyre which exhibits performance properties in the shaded area of Figure 1 and which is therefore particularly suitable for passenger cars equipped with anti-lock braking systems.

Accordingly the present invention provides a radial tyre for passenger cars comprises a tread and a sidewall, the tread formed from a rubber composition comprising a rubber component, a reinforcing material and a vulcanising agent characterised in that the rubber component contains at least 80% by weight of solution-polymerised styrene butadiene rubber which has a styrene content of 15 to 38% by weight and a vinyl content in the butadiene portion of 20 to 75% by weight and a random styrene distribution and the tread has a tan $\delta$ peak temperature of -40 to -5°C, a one side half width (W/2) near the tan $\delta$ peak temperature of 25 deg or less and a JIS-A hardness of 56 to 72, said tan $\delta$ peak temperature and one side half width (W/2) being obtained from a viscoelasticity (tan $\delta$) temperature distribution curve which is determined using a viscoelastic spectrometer at a frequency of 10Hz, an initial strain of 10%, and an amplitude of ± 0.25% and a temperature elevating rate of 2°C/min.

Further aspects of the invention will be apparent from the following description, by way of example only, in conjunction with the attached drawings in which:

Figure 1 shows the relationship between slip ratio of tyres and both friction coefficient and cornering force;

Figure 2 shows an example of a viscoelasticity temperature distribution curve for explaining the viscoelasticity (tan $\delta$) peak temperature and one side half width.

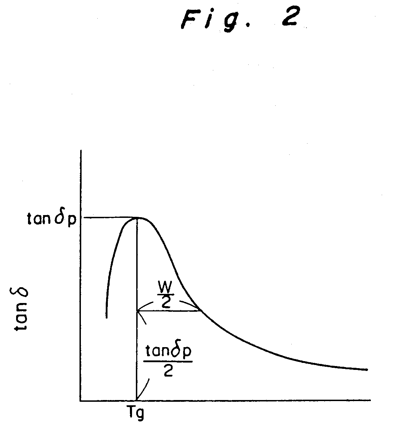

The viscoelasticity temperature distribution curve for a tyre tread rubber compound may be obtained using a viscoelastic spectrometer (available from Iwamoto Manufacturing Co Ltd). The test is carried out at a frequency of 10 Hz, an initial strain of 10%, an amplitude of ±0.25% and a rate of increasing temperature of 2°C/min. Figure 2 shows an example of a general viscoelasticity temperature distribution curve determined at the above conditions. In Figure 2, the abscissa shows temperature and the ordinate shows viscoelasticity (tan $\delta$). The viscoelasticity peak temperature is indicated by Tg. The one side half width is indicated as W/2 and is the value for the distance between two points where the line 1/2 peak viscoelasticity (tan $\delta p$) is crossed with both the perpendicular line at Tg and the plotted curve.

Radial tyres are generally composed of a tread and a sidewall, but in the present invention the tread has certain specified properties. The tread also may have a JIS-A hardness of 56 to 72, preferably 60 to 68. If the hardness is less than 56, the rubber is so soft that cornering power and cornering force are lower and it is difficult to turn the vehicle. If it is more than 72, the rubber is so hard that ride comfort becomes poor.

Also, the contact area between the road and the tyre is lowered, thus lowering the grip properties of the tyre.

The tread is prepared from a rubber composition which comprises a rubber component, a reinforcing material and a vulcanising agent. The method for producing the tread of the present invention is known to persons skilled in the art, but the adjustment of the physical properties as mentioned above is generally conducted by selecting rubber components, crosslinking agents, and amounts of crosslinking agents, vulcanising time and the like.

If Tg is less than -40°C, braking properties and turning properties are deteriorated. If Tg is more than -5°C, grip properties on winter roads significantly deteriorate. If the half width is more than 25°, then the slip ratio which indicates the maximum friction degree increases to more than 20% and does not accomplish the object of the present invention.

The rubber component suitable for the tread of the present invention contains at least 80% by weight of a solution-polymerised styrene butadiene rubber which has a styrene content of 15 to 38% by weight and a vinyl content in the butadiene portion of 20 to 75% by weight and which has a random styrene distribution. If the styrene content is outside the above range, the Tg is not within the range of -40 to -5°C. If the vinyl content in the butadiene portion is less than 20%, the Tg is less than -40°C and this is undesirable because of poor braking properties. If the vinyl content is more than 75%, the rubber strength is deteriorated to give a poor wear resistance and poor tread groove cracking resistance. If the styrene distribution is not random, thus if some styrene-block portion or styrene-continuous portion is present, then the half width (W/2) is more than 25°.

The reinforcing material of the rubber composition is one which is used for tyre treads, for example carbon black. The carbon black preferably has a particle size of 15 to 35 micrometer. Particle sizes of less than 15 micrometer increase exothermic heat and rolling resistance and those of more than 35 micrometer reduce wear resistance and grip properties.

The vulcanising agent is generally sulfur, but others (e.g. organic peroxides) may be used.

The rubber composition may contain additives, such as wax, oil, antioxidant, filler, vulcanisation accelerator and the like.

## EXAMPLES

The present invention is illustrated by the following Examples which, however, are not to be construed as limiting the invention to their details.

### Example 1

Synthetic rubber having the characteristics as shown in Table 1 was employed and a rubber composition was prepared from the ingredients and amounts as shown in Table 2.

Table 1

| | Styrene content (% by weight) | Vinyl content in butadiene portion (% by weight) | Styrene distribution |
|---|---|---|---|
| Emulsion polymerized styrene butadiene rubber | | | |
| (a) *1 | 23.5 | 18 | Random |
| (b) *2 | 35 | 18 | Random |
| (c) *3 | 45 | 18 | Random |
| (d) | 60 | 18 | Random |
| Solution polymerized styrene butadiene rubber | | | |
| (A) *4 | 10 | 13 | Random |
| (B) | 18 | 13 | Random |
| (C) | 15 | 35 | Random |
| (D) | 30 | 35 | Random |
| (E) | 30 | 40 | Random |
| (F) | 20 | 70 | Random |
| (G) | 35 | 50 | Random |
| (H) | 40 | 40 | Random |
| (K) | 40 | 50 | Random |
| (L) | 20 | 70 | Some styrene succession portions |

*1: Sumitomo Chemical Co., Ltd. SBR 1712
*2: Nippon Zeon Co., Ltd. NIPOL9520
*3: Nippon Zeon Co., Ltd. NIPOL9521
*4: Asahi Chemical Industry Co., Ltd. Toughden 1530
Call have an oil extending amount of 37/5 phr.

EP 0 430 617 B1

Table 2

| | |
|---|---|
| Oil extended styrene butadiene rubber | 137.5 |
| Carbon Black | 95 |
| Aroma oil | 12.5 |
| Wax | 2 |
| Antioxidant * | 2 |
| Stearic acid | 1 |
| Zinc white (oxide) | 3 |
| Sulfur | 2 |
| Vulcanisation accelerator | 1 |

(* N,N$^1$-phenyl-p-phenylenediamine)

A tyre of 225/50R16 size was prepared with a tread of the rubber composition. A slip ratio of a maximum friction coefficient was obtained from the friction coefficient - slip curve. A braking test and turning test were carried out on a wet road with an anti-lock brake system car (ABS car) and a non-ABS car, with these tyres. The results are shown in Table 3.

The tyre tread was tested on a JIS-A hardness meter and the results also are shown in Table 3. A rubber sample (4mm x 2mm x 40mm) was taken from the tread and tested on a spectrometer available from Iwamoto Manufacturing Co Ltd, to obtain a viscoelasticity temperature distribution curve. The measured viscoelasticity peak temperature and one side half width are shown in Table 3.

An evaluation of the tyre was conducted as follows:

1. Slip ratio (%) at which Max $\mu$ is present

A slip ratio and friction coefficient ($\mu$) curve was obtained using a special tractor at a tyre inflation pressure of 2.4Kgf/cm$^2$, a load of 350 Kgf and a speed of 40Km/h. Max $\mu$ was obtained from the curve.

2. Brake index

The speed of a 2,000cc ABS test car having the tyres of the present invention at an inflation pressure of 2.4Kgf/cm$^2$ was reduced from 40Km/h to 20Km/h to obtain a retardation. The numbers in Table 3 are indexes which are calculated with the tyre of Sample A set at 100.

The roads for tests (1) and (2) were an asphalt road of Skid Number of about 50 and a concrete road of Skid Number of about 35.

3. Turning properties

A 2,000cc test car was driven by an experienced test driver with the tyres of the present invention in a turning test on an asphalt surface at a diameter of 50m. After driving, the feel of turning was evaluated on a basis of five grades. The larger the number, the better the feeling.

4. Rolling resistance

Rolling resistance was determined using a rolling resistance tester at a speed of 80Km/h, an inflated pressure of 2.4Kgf/cm² and a load of 350 Kgf. The numbers in Table 3 are indexes which are calculated as the tyre of Sample A being 100. The smaller the number, the better the rolling resistance.

Table 3

| Sample No. | | Comparative Examples | | | | | Examples | | | | |
|---|---|---|---|---|---|---|---|---|---|---|---|
| | | A | B | C | D | E | F | G | H | I | J |
| Oil extended SBR | | (a) | (b) | (d) | (B) | (H) | (C) | (D) | (E) | (F) | (G) |
| Tan δ peak temperature (°C) | | -30 | -18 | +12 | -48 | -2 | -38 | -20 | -16 | -14 | -10 |
| One side half width W/2(deg.) | | 26 | 25 | 22 | 27 | 18 | 21 | 20 | 18 | 16 | 22 |
| Hardness JIS-A | | 68 | 71 | 88 | 65 | 71 | 68 | 67 | 67 | 65 | 70 |
| Tan δ 70°C | | 0.319 | 0.364 | 0.431 | 0.311 | 0.372 | 0.313 | 0.311 | 0.333 | 0.346 | 0.321 |
| Tyre properties | Wet asphalt roads — Slip ratio (%) at Max μ | 12 | 10 | 7 | 12 | 8 | 12 | 11 | 13 | 12 | 11 |
| | Wet asphalt roads — Brake index of ABS car | 100 | 102 | 95 | 90 | 103 | 100 | 103 | 104 | 105 | 104 |
| | Wet asphalt roads — Brake index of non ABS car | 100 | 103 | 92 | 86 | 105 | 100 | 104 | 104 | 103 | 104 |
| | Turning properties | 3 | 4 | 1 | 2 | 4 | 3 | 4 | 5 | 5 | 5 |
| | Wet smooth concrete roads — Slip ratio (%) at Max μ | 25 | 25 | 15 | 30 | 16 | 18 | 16 | 15 | 15 | 14 |
| | Wet smooth concrete roads — Brake index of ABS car | 100 | 101 | 88 | 90 | 97 | 102 | 103 | 105 | 108 | 106 |
| | Wet smooth concrete roads — Brake index of non ABS car | 100 | 100 | 85 | 90 | 98 | 100 | 101 | 103 | 102 | 103 |
| Rolling resistance | | 100 | 107 | 140 | 96 | 108 | 100 | 95 | 101 | 102 | 100 |

As is apparent from Table 3, the one side half widths of the Examples of the invention are smaller than those of the Comparative Examples, and the Max $\mu$ is within the slip ratio range of 10 to 20%. The wet braking properties and turning properties of the inventive Examples are superior on the ABS car. Since the tyre of sample C has higher Tg and hardness, its braking properties are poor. The tyre of sample D has poor braking properties because of low Tg. The tyre of sample E has poor rolling resistance.

Example 2

This shows tyres prepared from a mixture of synthetic rubbers. The rubbers employed and ingredients are those given in Tables 1 and 2. Tyres were prepared as generally described in Example 1 and the evaluations were also conducted as generally described in Example 1.

Table 4

| Sample No. | Comparative Examples | | Examples | |
|---|---|---|---|---|
| | K | L | M | N |
| Oil extended SBR (parts by weight) | (a) 68.75<br>(K) 44.75<br>(A) 24.0 | (D) 68.75<br>(C) 48.15<br>(d) 20.60 | (E) 137.5 | (G) 137.5 |
| Tan δ peak temperature (°C) | -16 | -9 | -16 | -10 |
| One side half width W/2(deg.) | 43 | 50 | 18 | 22 |
| Hardness JIS-A | 66 | 68 | 67 | 70 |
| Tan δ 70 °C | 0.336 | 0.323 | 0.333 | 0.321 |
| Tyre properties — Wet asphalt roads: Slip ratio (%) at Max μ | 13 | 16 | 13 | 11 |
| Brake index of ABS car | 99 | 97 | 104 | 104 |
| Brake index of non ABS car | 104 | 105 | 104 | 104 |
| Turning properties | 3 | 3 | 5 | 5 |
| Wet smooth concrete roads: Slip ratio (%) at Max μ | 45 | 40 | 15 | 14 |
| Brake index of ABS car | 98 | 95 | 105 | 106 |
| Brake index of non ABS car | 103 | 104 | 103 | 103 |
| Rolling resistance | 102 | 101 | 101 | 100 |

As is apparent from Table 4, in the case where a mixture of styrene butadiene rubbers having different Tg was employed, the one side half widths become higher and the slip ratios indicating Max μ become higher, thus deteriorating braking properties.

Example 3

This shows tyres prepared from a solution polymerised SBR having a random styrene distribution and a solution polymerised SBR having some styrene succession portions. The rubbers employed and ingredients are based on Tables 1 and 2. Tyres were prepared as generally described in Example 1 and the evaluations were also conducted as generally described in Example 1.

As is apparent from Table 5, the SBR having random styrene distribution imparts good properties, but the SBR having some styrene succession distribution imparts poor braking properties with an ABS car.

Table 5

|  |  |  | Comparative Example | Example |
|---|---|---|---|---|
| Sample No. |  |  | O | P |
| Oil extended SBR |  |  | (L) 137.5 | (F) 137.5 |
| Tan $\delta$ peak temperature ($^\circ$C) |  |  | -14 | -14 |
| One side half width W/2(deg) |  |  | 67 | 16 |
| Hardness JIS-A |  |  | 78 | 65 |
| Tan $\delta$ 70 $^\circ$C |  |  | 0.348 | 0.346 |
| Tyre properties | Wet asphalt roads | Slip ratio (%) at Max $\mu$ | 30 | 12 |
|  |  | Brake index of ABS car | 96 | 105 |
|  |  | Brake index of non ABS car | 99 | 103 |
|  |  | Turning properties | 4 | 5 |
|  | Wet smooth concrete roads | Slip ratio (%) at Max $\mu$ | 40 | 15 |
|  |  | Brake index of ABS car | 89 | 108 |
|  |  | Brake index of non ABS car | 100 | 102 |
| Rolling resistance |  |  | 104 | 102 |

**Claims**

1. A radial tyre for passenger cars comprising a tread and a sidewall, the tread formed from a rubber composition comprising a rubber component, a reinforcing material and a vulcanising agent characterised in that the rubber component contains at least 80% by weight of solution-polymerised styrene butadiene rubber which has a styrene content of 15 to 38% by weight and a vinyl content in the butadiene portion of 20 to 75% by weight and a random styrene distribution and the tread has a tan $\delta$ peak temperature of -40 to -5$^\circ$C, a one side half width (W/2) near the tan $\delta$ peak temperature of 25 deg or less and a JIS-A hardness of 56 to 72, said tan $\delta$ peak temperature and one side half width (W/2) being obtained from a viscoelasticity (tan $\delta$) temperature distribution curve which is determined using a viscoelastic spectrometer at a frequency of 10Hz, an initial strain of 10%, and an amplitude of ± 0.25% and a temperature elevating rate of 2$^\circ$C/min.

2. A radial tyre according to claim 1 characterised in that said reinforcing material is carbon black having a particle size of 15 to 35 micrometer.

3. A radial tyre according to claim 1 or 2 characterised in that said vulcanising agent is sulfur.

4. A radial tyre according to claim 1, 2 or 3 characterised in that said rubber composition further contains was, oil, antioxidant, filler and vulcanisation accelerator.

**Patentansprüche**

1. Ein Radialreifen für Personenwagen mit einer Lauffläche und einer Seitenwand, wobei die Lauffläche aus einer Gummizusammensetzung mit einer Gummikomponente, einem verstärkenden Material und einem Vulkanisierungsmittel gebildet ist, dadurch gekennzeichnet, daß die Gummikomponente zumindest 80 Gew.-% an lösungspolymerisiertem Styrolbutadiengummi enthält, welches einen Styrolgehalt von 15 bis 38 Gew.-% und einen Vinylgehalt im Butadienteil von 20 bis 75 Gew.-% und eine Zufallsstyrolverteilung aufweist, und die Lauffläche eine tan $\delta$-Spitzentemperatur von -40 bis -5°C aufweist, eine Einseitenhalbwertsbreite (W/2) nahe der tan $\delta$-Spitzentemperatur von 25 Grad oder darunter und eine JIS-A Härte von 56 bis 72, wobei die tan $\delta$-Spitzentemperatur und Einseitenhalbwertsbreite (W/2) aus einer Viskoelastizitäts-(tan $\delta$)-Temperaturverteilungskurve erhalten werden, welche bestimmt wird, indem ein viskoelastisches Spektrometer bei einer Frequenz von 10 Hz, einer anfänglichen Belastung von 10 % und einer Amplitude von ±0,25 % und einer Temperaturanstiegsrate von 2°C/min verwendet wird.

2. Ein Radialreifen nach Anspruch 1, dadurch gekennzeichnet, daß das Verstärkungsmaterial Ruß mit einer Partikelgröße von 15 bis 35 Mikrometer ist.

3. Ein Radialreifen nach Anspruch 1 oder 2, dadurch gekennzeichnet, daß das Vulkanisierungsmittel Schwefel ist.

4. Ein Radialreifen nach Anspruch 1, 2 oder 3, dadurch gekennzeichnet, daß die Gummizusammensetzung weiter Wachs, Öl, Antioxidationsmittel, Füllstoff und Vulkanisationsbeschleuniger enthält.

**Revendications**

1. Pneumatique à carcasse radiale pour voiture de tourisme, comprenant une bande de roulement et un flanc, la bande de roulement étant formée à partir d'une composition de caoutchouc contenant un ingrédient de caoutchouc, une matière renforçante et un agent de vulcanisation, caractérisé en ce que l'ingrédient de caoutchouc contient au moins 80 % en poids d'un caoutchouc de butadiène-styrène polymérisé en solution qui a une teneur en styrène comprise entre 15 et 38 % en poids et une teneur en vinyle de la partie butadiène comprise entre 20 et 75 % en poids et une distribution statistique du styrène, et la bande de roulement a une température de crête tg$\delta$ comprise entre -40 et -5 °C, une demi-largeur latérale (W/2) à proximité de la température de crête tg$\delta$ de 25° ou moins, et une dureté JIS-A comprise entre 56 et 72, la température de crête tg$\delta$ et la demi-largeur latérale (W/2) étant obtenues à partir d'une courbe de distribution de température de viscoélasticité (tg$\delta$) qui est déterminée avec un spectromètre viscoélastique à une fréquence de 10 Hz, avec une déformation initiale de 10 % et une amplitude de ± 0,25 % et une vitesse d'élévation de température de 2 °C/min.

2. Pneumatique à carcasse radiale selon la revendication 1, caractérisé en ce que la matière renforçante est du noir de carbone dont la dimension particulaire est comprise entre 15 et 35 $\mu$m.

3. Pneumatique à carcasse radiale selon la revendication 1 ou 2, caractérisé en ce que l'agent de vulcanisation est le soufre.

4. Pneumatique à carcasse radiale selon la revendication 1, 2 ou 3, caractérisé en ce que la composition de caoutchouc contient en outre une cire, une huile, un antioxydant, une charge et un accélérateur de vulcanisation.

Fig. 1

# Fig. 2